# EUROPEAN PATENT APPLICATION

(11) **EP 3 542 889 A1**
(43) Date of publication of application: **25.09.2019**
(21) Application number: 18162845.4
(22) Date of filing: 20.03.2018
(51) Int. Cl.: B01D 61/02, B01D 61/08, C02F 1/44, F16K 31/126, F16K 31/08, F16K 7/17, F16K 31/365

(54) **LIQUID TREATMENT APPARATUS, VALVE THEREOF AND USE OF THE VALVE**

(71) Applicant: Brita GmbH, 65232 Taunusstein (DE)
(72) Inventor: Köhler, André, 65329 Hohenstein (DE)

(57) **Abstract**

A valve for a liquid treatment apparatus includes a valve housing (21,22). The valve housing (21,22) includes at least three ports. The ports include a first port (46) for connection to a conduit (20) for an actuating fluid; a liquid inlet port (29); and a liquid outlet port (30). The liquid inlet port (29) and the liquid outlet port (30) are in liquid communication via a passage (31,35,36) through a valve seat (33). The valve housing (21,22) includes a chamber (48) in fluid communication with the first port (46). The valve includes a movable valve part (23) movable into and out of engagement with the valve seat (33) to regulate a flow of liquid through the valve seat (33). The valve includes an actuating part (24), arranged to transfer a force due to the pressure of fluid in the chamber (48) to the movable valve part (23), and at least one sealing part (23) for separating fluid in the chamber (22) from liquid in the passage (31,35,36) At least one permanent magnet is arranged to exert a magnetic force acting to urge at least one of the actuating part (24) and the movable valve part (23) towards the valve seat (33) at least when the movable valve part (23) is within a certain distance of the valve seat (33).

## Description

The invention relates to a valve for a liquid treatment apparatus, the valve including:
a valve housing,
wherein the valve housing includes at least three ports,
   wherein the ports include
   a first port for connection to a conduit for an actuating fluid;
   a liquid inlet port; and
   a liquid outlet port,
      wherein the liquid inlet port and the liquid outlet port are in liquid communication via a passage through a valve seat, and
      wherein the valve housing includes a chamber in fluid communication with the first port;
   a movable valve part movable into and out of engagement with the valve seat to regulate a flow of liquid through the valve seat;
   an actuating part, arranged to transfer a force due to the pressure of fluid in the chamber to the movable valve part; and
   at least one sealing part for separating fluid in the chamber from liquid in the passage.

The invention also relates to a liquid treatment apparatus including such a valve.

The invention also relates to a use of such a valve.

US 8,741,148 B2 discloses a water treatment system. Water to be treated is delivered to a Reverse Osmosis (RO) module or cartridge, which produces treated water named permeate. The permeate is stored in a storage tank, from where it is dispensed, on demand, through a faucet. The storage tank includes an internal bladder that, when pressurised, urges permeate out of a storage chamber for delivery to the faucet. The water to be treated is delivered to a supply line having two branches. The water in one of the branch lines enters an inlet port of an RO control valve. The communication of the inlet port with a receiving chamber of the valve is controlled by a diaphragm assembly that includes upper and lower co-acting diaphragms connected together by a piston member. Increased permeate pressure in the tank chamber will be felt by the upper diaphragm in the RO control valve via a permeate signal line. The RO control valve includes a signal chamber that, when pressurised, exerts forces generated by fluid pressure on the upper diaphragm, which urges the diaphragm assembly downwards. Sufficient downward movement will cause the lower diaphragm to engage and seal the inlet port and inhibit source water from entering a lower chamber. At initial start-up, the signal chamber is depressurised and hence the diaphragm is spaced from the inlet port. This allows the supply water to flow into the lower chamber of the valve and into an inlet of the RO cartridge. The permeate pressure that will effect closure of the RO control valve is determined by the ratio of the effective pressure areas of the upper and lower diaphragms. In the illustrated embodiment, when permeate pressure reaches slightly more than two-thirds supply line pressure, permeate production is terminated. Permeate production is reinstituted upon opening of the RO control valve when permeate pressure falls below one-third of the supply line pressure.

The different pressure levels for starting and terminating permeate production allow a higher quality of permeate to be obtained, in that a larger fraction of the permeate is produced at relatively large trans-membrane pressure differentials. The permeate signal line allows permeate production to be regulated hydraulically. Electrically powered components are not required.

However, it may happen that, during permeate production, the pressure in the storage tank rises to a pressure nearly sufficient to close the RO control valve against the pressure of the untreated water, but that a small trickle of water flowing through the faucet means that that pressure is not reached. A corresponding small flow of water through the RO module would result in permeate produced at a relatively low trans-membrane pressure differential.

It is an object of the invention to provide a valve, liquid treatment apparatus and use of a valve of the type defined above in the opening paragraphs that allow the accumulator to be filled with treated liquid of which a relatively high proportion is produced at relatively large pressure differentials in the liquid treatment device comprised in the liquid treatment apparatus.

This object is achieved according to a first aspect by the valve according to the invention, which is characterised by at least one permanent magnet, arranged to exert a magnetic force acting to urge at least one of the actuating part and the movable valve part towards the valve seat at least when the valve part is within a certain distance of the valve seat.

The valve is controlled by the pressure of the actuating fluid, so that production of treated liquid in the liquid treatment apparatus is regulated hydraulically and/or pneumatically. The pressure of the actuating fluid results in a force on one end of the actuating part. This is transferred to the movable valve part at the opposite end, optionally via a part interposed between the movable valve part and the actuating part. The force counteracts the force due to the pressure of liquid from the liquid inlet port. In use, the actuating fluid is arranged to have a pressure corresponding or proportional to the pressure of treated liquid in an accumulator of the liquid treatment apparatus. The pressure of treated liquid in turn is a measure of the amount of treated liquid in a treated liquid reservoir comprised in the accumulator. When, in the course of filling the accumulator with treated liquid, the pressure of the actuating fluid is no longer balanced by that of the liquid entering the valve through the liquid inlet port, the movable valve part is moved towards the valve seat. At a certain distance, the magnetic force acts to urge the movable valve part into full engagement with the valve seat. Thus, even if the treated liquid pressure in the accumulator doesn't quite reach the level set for closing the valve by itself, the valve is still reliably closed. The magnetic attraction ensures that there are no stable positions for the movable part commensurate with low flow rates. The at least one sealing part for separating fluid in the chamber from liquid in the passage ensures that the actuating fluid and the liquid of which the flow through the valve seat is regulated cannot mix. This makes the valve suitable for a liquid treatment apparatus for treating a potable liquid such as drinking water. The valve also exhibits hysteresis, in that a larger liquid pressure is required to open it against at least the magnetic force than is required to close the valve.

An embodiment of the valve is arranged to move from a closed configuration, in which a flow of liquid through the valve seat is interrupted, to an open configuration at a lower actuating fluid pressure than an actuating fluid pressure at which it is arranged to move from the open to the closed configuration, wherein the movable valve part is arranged to have a larger effective surface area exposed to the liquid in the open configuration than in the closed configuration.

This valve exhibits even more hysteresis. It ensures that the accumulator is emptied of treated liquid by a relatively large amount before being replenished. At the lower actuating fluid pressure, the valve moves to the open configuration, in which the movable valve part is out of engagement with the valve seat and liquid can flow through the valve seat. The valve seat, in particular an aperture thereof through which the liquid inlet port and the liquid outlet port are in liquid communciation in the open configuration, may limit the effective surface area of the movable valve part that is exposed to the liquid in the closed configuration. In this context, the effective surface area is the area of the movable section of the movable valve part on which pressure can act and which can respond by movement. Since the permanent magnet already provides a certain amount of hysteresis, the effective surface area ratio of this embodiment need not be quite so large. For a given cross-sectional area of the passage through the valve seat, the movable valve part can have a smaller effective surface area on which the liquid is arranged to act in the open configuration. Thus, the valve of this embodiment can be more compact.

In an embodiment of the valve, the at least one sealing part includes at least one liquid-impermeable diaphragm.

This ensures relatively good separation of actuating fluid from liquid in the passage. The diaphragm will generally have a moving part surrounded by an edge section fixed in position in the valve housing. It may be elastic and also function to provide a biasing force urging the movable valve part into a particular position, e.g. into engagement with the valve seat. This makes it easier to provide a hysteresis effect causing the valve to open at a lower actuating fluid pressure than that at which it closes. The valve may in particular comprise a pair of coupled liquid-impermeable diaphragms, one exposed to the chamber on one side and one exposed to liquid when liquid flows through the valve seat. By providing the diaphragms with different effective surface areas exposed to the fluid and liquid respectively, a smaller actuating fluid pressure can balance a larger liquid pressure.

In a variant of this embodiment, at least one of the at least one diaphragms comprises the movable valve part.

In this variant, the diaphragm need not have an aperture through which the movable valve part must pass. Furthermore, the area exposed to the liquid when the diaphragm engages the valve seat (the closed configuration) can be smaller than when it is out of engagement with the valve seat (the open configuration). This provides for hysteresis. The valve seat may be defined by a raised part, closed on itself about a valve aperture and protruding into a chamber in which the diaphragm is arranged to move. This raised part may be annular, especially if the diaphragm, or at least the movable part thereof, is circular.

In a variant of the embodiment in which the at least one sealing part includes at least one liquid-impermeable diaphragm, the actuating part includes a movable valve element, guided for movement in an axial direction towards and away from the valve seat and in contact with at least one of the at least one diaphragms at a respective axial end.

In a particular variant hereof, a first axial end of the movable valve element contacts a diaphragm exposed to the chamber over a first surface area or has an axial end surface exposed to the chamber over the first surface area, a second axial end of the movable valve element opposite the first axial end forms the movable valve part and has an axial end surface with a second surface area or contacts a diaphragm forming the movable valve part and exposable to liquid over a second surface area on an opposite side to the movable valve element when out of engagement with the valve seat, and the first surface area is larger than the second surface area.

The actuating fluid pressure can thus be lower than the pressure of the liquid at the inlet port. If the second axial end contacts a diaphragm, the opposite side of the diaphragm is exposed over an area with a size corresponding to the second surface area to liquid flowing through the passage. Areas of diaphragms in this context are effective areas, namely of the movable section of the diaphragm concerned.

In an embodiment, the movable valve part is made of non-ferromagnetic material.

This contributes to reliable operation of the valve. The material may be a polymer or rubber material, for example. If made of several materials, all may be materials other than ferromagnetic materials. The movable valve part is neither magnetic nor magnetisable, so that it cannot attract contamination that would hinder proper engagement with the valve seat.

In an embodiment of the valve the at least one magnet is comprised in at least one of the movable valve part and the actuating part, and the valve housing includes at least a part made of magnetisable material.

Thus, the valve housing, particularly the section forming the valve seat, does not attract metallic contamination. Furthermore, a relatively large housing component can be made in one piece from a body of relatively inexpensive material. The body can be machined, for example.

According to another aspect, the liquid treatment apparatus according to the invention includes:
an inlet for liquid to be treated;
a liquid treatment device having at least an inlet for liquid to be treated and an outlet for treated liquid;
an accumulator for storing the treated liquid;
a valve according to the invention, arranged to regulate a flow of liquid through the liquid treatment device; and
a conduit connected to the first port and arranged to carry an actuating fluid at a pressure commensurate with an amount of liquid in the accumulator.

The liquid treatment device may be a filtration device. It may alternatively or additionally be a device comprising a liquid treatment medium for sorption or elution of components of the liquid. The liquid treatment medium may comprise loose matter arranged in a bed or bonded matter, e.g. formed into a hollow cylindrical porous and liquid-permeable block or a porous liquid-permeable plate or disc. Filtration may be depth filtration or in particular screening.

The accumulator may include a reservoir for treated liquid held under pressure by at least one part external to the reservoir, wherein the reservoir is bounded by a barrier of which at least a section is movable against the force exerted by the external part, this force increasing as the movable barrier (section) is displaced due to an increase in volume of the liquid treatment reservoir.

The valve is arranged to regulate the flow of liquid through the liquid treatment device, i.e. into the device inlet and out of the device outlet, and thus the production of treated liquid. The accumulator forms a buffer, so that the liquid treatment apparatus can temporarily deliver treated liquid at a higher rate than it is capable of producing. In periods between the delivery of treated liquid through the apparatus outlet, the accumulator can be refilled, but only if it has previously been emptied sufficiently. Production therefore takes place at relatively high pressure differentials across the liquid treatment device, corresponding to relatively high flow rates.

In an embodiment of the apparatus, the actuating fluid is treated liquid.

This embodiment is relatively easy to operate. The actuating fluid conduit can be connected directly to the accumulator or to a conduit for carrying treated liquid to and from the accumulator. The sealing part of the valve prevents contamination of the actuating fluid by the liquid of which the flow is regulated, which may be liquid yet to be treated or retentate, for example.

In a variant, the accumulator includes a treated liquid reservoir, and the conduit is connected to a fitting positioned at a port of the treated liquid reservoir.

The actuating fluid pressure is then a relatively accurate measure of the amount of treated liquid in the accumulator.

In an embodiment, the accumulator is a hydropneumatic accumulator.

This is a relatively effective way of ensuring that the pressure of the treated liquid in the accumulator is a measure of the amount of treated liquid in the accumulator. That pressure can be converted relatively easily into the pressure of the actuating fluid, or the treated liquid can form the actuating fluid.

In an embodiment, the liquid treatment device is a membrane filtration device.

This is an application in which it is relatively important to ensure that the trans-membrane pressure is high when filtrate is being produced. Low rates of flow through the membrane are generally to be avoided. The membrane filtration device may be configured for reverse osmosis, ultrafiltration or nanofiltration at pressure differentials corresponding to typical water mains pressures, e.g. at pressure differentials of between 1 and 10 bar.

In a variant of this embodiment, the membrane filtration device is configured to operate in cross-flow filtration mode and includes an outlet for retentate.

In this embodiment, back-flushing is not required. Completely hydraulic and/or pneumatic regulation of the operation of the liquid treatment apparatus is thus more easily achievable. Interruption of a flow of liquid when not filtrate needs to be produced helps reduce wastage, e.g. consumption of mains water that would otherwise pass through the liquid treatment device and out through the retentate outlet.

In a particular variant hereof, the valve is arranged between the apparatus inlet and the liquid treatment device inlet.

This ensures that the production of filtrate stops when the flow of liquid through the valve is interrupted. If the valve were to be arranged to interrupt the flow of retentate, liquid might still pass through the membrane at a low rate or impurities might diffuse through the membrane. If the valve were to interrupt the flow of filtrate from the membrane filtration device, the pressure of the filtrate in the accumulator could not govern the operation of the valve.

A variant of the embodiment of the liquid treatment apparatus in which the membrane filtration device is configured to operate in cross-flow filtration mode and includes an outlet for retentate further includes a pump having an inlet port connected to the liquid treatment device outlet.

The pump increases the trans-membrane pressure differential during the production of filtrate.

In a particular variant hereof, the pump is connected to the retentate outlet and arranged to be driven by a flow of retentate from the retentate outlet.

The pump may include a rotor or piston driven by the retentate flow or it may include an ejector or venturi device as disclosed, for example, in EP 2 992 946 A1. In this embodiment, the pressure difference across the liquid treatment apparatus drives the production of filtrate. Electrically powered components can be avoided.

According to another aspect of the invention, it is proposed to use a valve according to the invention to regulate a flow of liquid to be treated in a liquid treatment apparatus, e.g. a liquid treatment apparatus according to the invention, in dependence on an amount of liquid in an accumulator arranged to store the treated liquid.

The invention will be explained in further detail with reference to the accompanying drawings, in which:
- Fig. 1: is a diagram of a liquid treatment apparatus connected to an appliance, the liquid treatment apparatus including a valve;
- Fig. 2: is a perspective view of a main housing part of the valve;
- Fig. 3: is a cross-sectional view of the main housing part;
- Fig. 4: is a perspective view of a closing housing part of the valve;
- Fig. 5: is a cross-sectional view of the closing housing part;
- Fig. 6: is a perspective view of a diaphragm for the valve;
- Fig. 7: is a perspective view of a spacer forming part of the valve;
- Fig. 8: is a cross-sectional view of the spacer;
- Fig. 9: is a perspective view of a movable valve element; and
- Fig. 10: is a side view of the movable valve element.

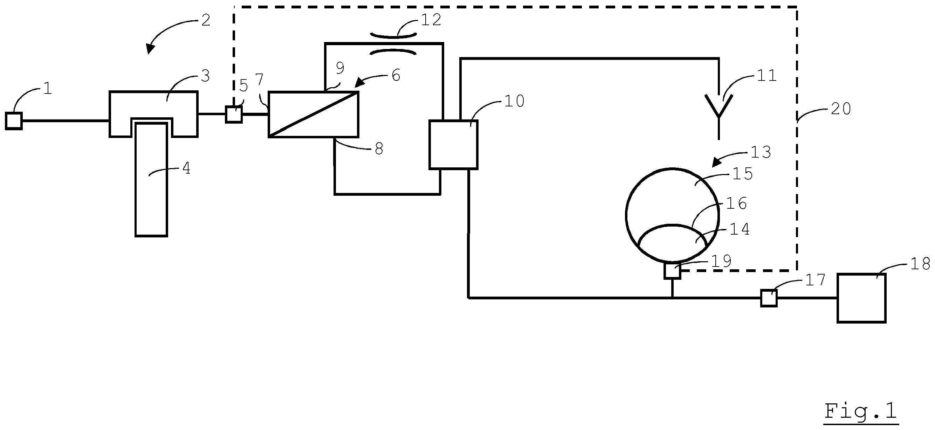

A liquid treatment apparatus (Fig. 1) for the treatment of e.g. an aqueous liquid includes an apparatus inlet, for example in the form of an inlet fitting 1 for connecting the liquid treatment apparatus to the mains water supply.

The liquid is optionally pre-treated in a pre-treatment system 2, for example a pre-treatment system 2 including a head part 3 and a replaceable liquid treatment cartridge 4. The pre-treatment may include mechanical filtration, de-alkalisation, softening, the removal of components by sorption, or the like. In particular, the liquid treatment cartridge 4 may include at least one of activated carbon and an ion exchanger, e.g. including weakly acidic cation exchange resin of which at least some is in the hydrogen form. The connection and configuration of the head part 3 and the liquid treatment cartridge 4 may be as described in WO 2008/122496 A1, for example.

A valve 5 is arranged to interrupt the supply of liquid to be treated to a membrane filtration device 6. In the illustrated embodiment, the membrane filtration device 6 is arranged to operate as a cross-flow filtration device. It follows that the membrane filtration device 6 includes a device inlet 7, a filtrate outlet 8 and a retentate outlet 9. The membrane filtration device 6 may include one or more membrane modules, e.g. in the form of a spiral wound membrane module, a hollow fibre membrane module, a tubular membrane module and/or a membrane in sheet form mounted on a frame. The membrane or membranes may have a pore size of at most 10 Å, so that the membrane is effective to remove at least some ions. However, the membrane filtration device 6 need not be a reverse osmosis (RO) filter, but may be configured for ultrafiltration or nanofiltration.

The retentate outlet 9 is connected to a filtrate pump 10 driven by the flow of retentate, in use. The retentate used to drive the filtrate pump 10 then flows to a drain 11. The filtrate pump 10 is a positive displacement pump. The filtrate pump 10 increases the trans-membrane pressure differential without requiring an electric power supply. It thus increases the purity of the filtrate. The filtrate pump 10 is generally of the type disclosed, for example, in WO 95/30472 A1. A variable throttle 12 determines the rate of flow of the retentate and can thus be used to vary the speed at which the filtrate pump 10 is operated.

Filtrate flows from the filtrate pump 10 to an accumulator 13. The accumulator 13 includes a filtrate reservoir 14 held under pressure by at least one part external to the filtrate reservoir 14. This may be a spring, a raised weight or, as illustrated, an essentially closed gas reservoir 15. The illustrated accumulator 13 is thus a hydropneumatic accumulator. An impermeable membrane 16 or similar barrier including at least a movable section for approximating the pressure in the filtrate reservoir 14 and the gas reservoir 15 separates the filtrate reservoir 14 from the gas reservoir 15.

The flow path from the filtrate outlet 8 of the membrane filtration device 6 continues to an apparatus outlet, e.g. in the form of an outlet fitting 17. A conduit to the accumulator 13 branches off from that flow path. Thus, the apparatus can supply filtrate at a higher rate than that at which it is produced.

In the illustrated embodiment, the outlet fitting 17 is connected to an appliance 18 such as a coffee machine, steamer, dishwasher, water bar or the like.

In the illustrated embodiment, a fitting 19 mounted directly on a port of the accumulator 13 is connected to a conduit 20 for an actuating fluid. In the illustrated embodiment, the actuating fluid is filtrate. In another embodiment, it may be a liquid or gas separated from the permeate by a diaphragm or other movable impermeable barrier in the fitting 19 to allow the actuating fluid to have a pressure corresponding to or proportional to that of the filtrate in the filtrate reservoir 14.

In an alternative embodiment, the actuating fluid may be used to sense the pressure in the gas reservoir 15 or otherwise be pressurised by the part external to the filtrate reservoir 14 arranged to exert a rising pressure on the filtrate reservoir 14 as the latter fills up with filtrate. Thus, the pressure of the actuating fluid is a measure of how much filtrate is in the filtrate reservoir 14, and thus in the accumulator 13.

In an alternative embodiment, the fitting 19 is located in the conduit section branching off to the accumulator 13 from the flow path from the filtrate outlet 8 to the apparatus outlet. The pressure of the actuating fluid then still provides a reasonably accurate measure of the amount of filtrate in the accumulator 13. As long as the filtrate pump 10 is present, the fitting 19 must at least be located downstream of the filtrate pump 10.

The actuating fluid pressure regulates the opening and closing of the valve 5 located between the apparatus inlet and the device inlet 7. The valve 5 is arranged to close (i.e. interrupt the flow of liquid) at a higher pressure than that at which it is arranged to open. Thus, the accumulator 13 is first emptied by a relatively large amount before filtrate production resumes to fill it up again.

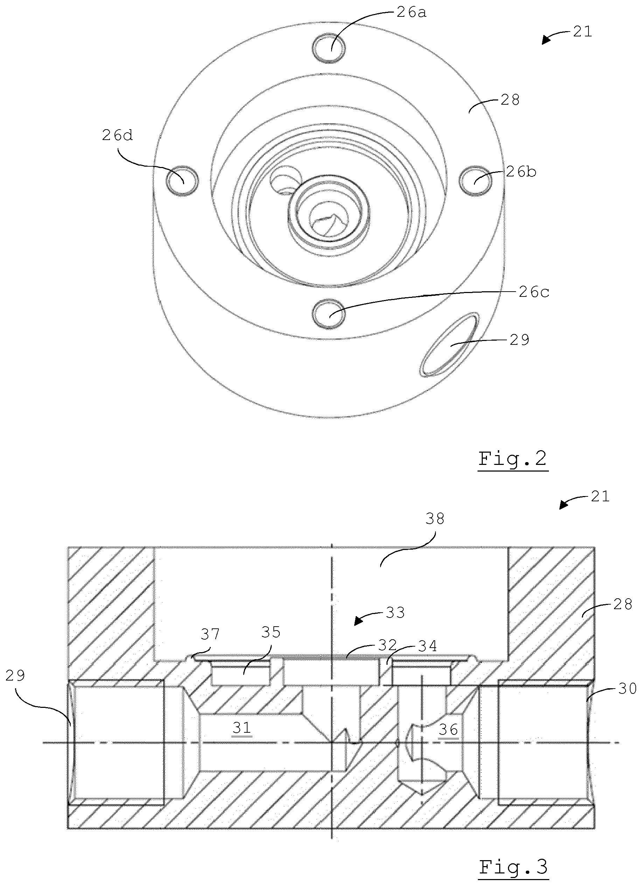

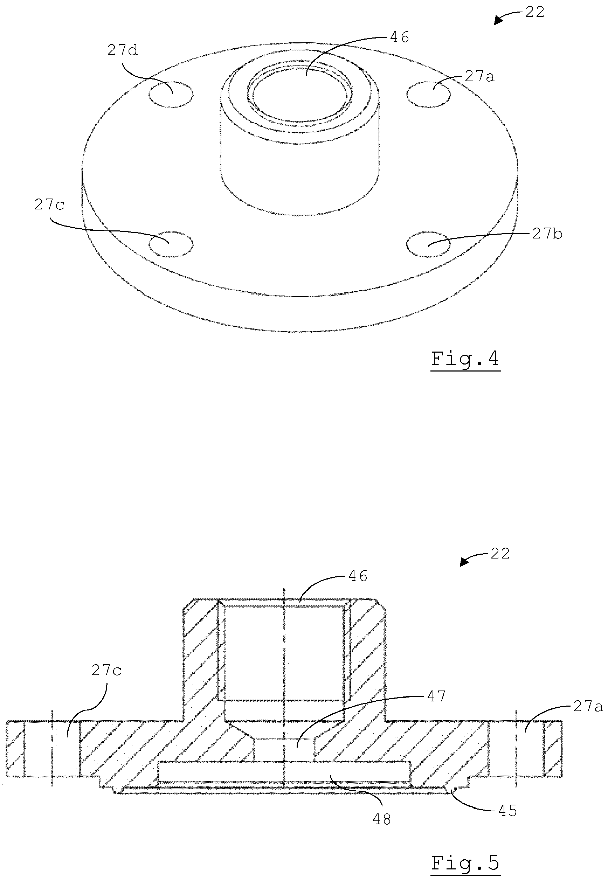

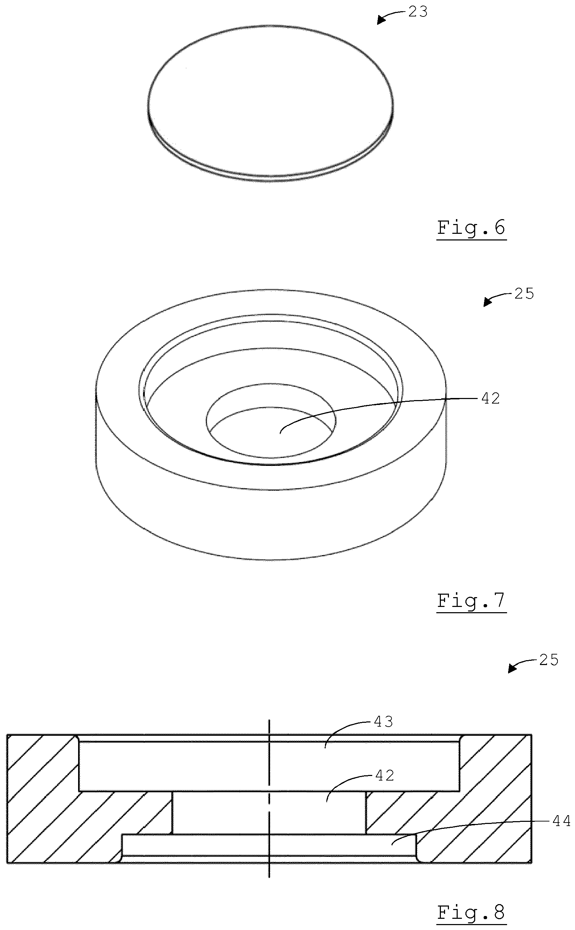

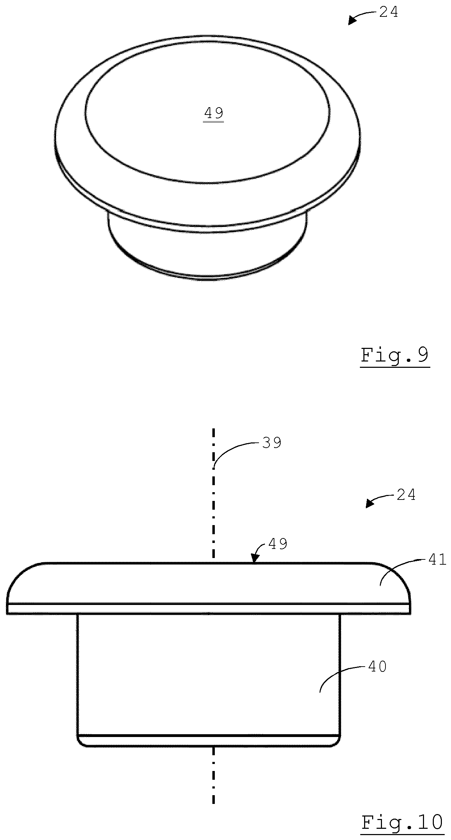

An embodiment of the valve 5 includes a housing formed by at least a main housing part 21 (Figs. 2,3) and a closing housing part 22 (Figs. 4,5). Two diaphragms 23 (Fig. 6), a movable valve element 24 (Figs. 9,10), and a spacer 25 (Figs. 7,8) are held between the main housing part 21 and the closing housing part 22. In the illustrated embodiment, the main housing part 21 and the closing housing part 22 are fixed together by fasteners (not shown), e.g. bolts for which bores 26a-d,27a-d are provided.

The diaphragms 23 are elastic. They may be made of one or more polymer materials or of rubber, for example. They may alternatively comprise a central, movable section surrounded by a corrugated transition section, with the central movable section being relatively rigid and defining an effective surface of the diaphragm concerned.

The main housing part 21 (Figs. 2,3) is in the form of a body 28 in which an inlet port 29 and an outlet port 30 are formed. An inlet passage 31 leads from the inlet port 29 to an aperture 32 in a valve seat 33. In the illustrated embodiment, the valve seat 33 is formed by an annular body section 34 around which a channel 35 is formed. An outlet passage 36 leads from the channel 35 to the outlet port 30.

The channel 35 is surrounded by a ridge 37, closed on itself about the valve seat 33. The valve seat 33, channel 35 and ridge 37 are formed at a bottom of a recess 38 in the main housing part 21. The recess 38 accommodates the spacer 25 and the diaphragms 23, as well as the movable valve element 24.

It is convenient to define a reference axis 39 (Fig. 9) for the movable valve element 24, which is aligned with the direction of movement of the movable valve element 24. In the illustrated embodiment, the movable valve element is rotationally symmetric with respect to the reference axis 39, but this merely simplifies the construction. The movable valve element 24 has an axial section 40 of reduced diameter at one axial end and an axial section 41 of increased diameter at an opposite axial end. The free end of the axial section 40 with reduced diameter is dimensioned to fit the valve seat 33. Furthermore, this axial section 40 fits an aperture 42 in the spacer 25 such that axial movement of the movable valve element 24 is guided by the spacer 25. Because there are two diaphragms 23 the fit need not provide a liquid-tight seal in the illustrated embodiment.

First and second recesses 43,44 (Fig. 8) are formed on opposite sides of the spacer 25 and interconnected by the spacer aperture 42. In the illustrated embodiment, the recesses 43,44 are generally cylindrical in shape. The first spacer recess 43 has a larger diameter than the second spacer recess 44. The diameter of the first spacer recess 43 is sized to accommodate the increased-diameter section 41 of the movable valve element 24. The diameter of the second spacer recess 44 is larger than that of the annular body section 34 forming the valve seat 33, but smaller than the diameter of the main housing part ridge 37. In use, the second spacer recess 44 faces the main housing part 21 and one of the two diaphragms 23 is sealingly arranged, e.g. clamped, between the main housing part ridge 37 and the axial end of the spacer 25 in which the second spacer recess 44 is formed. On the opposite side of the spacer 25, the second of the diaphragms 23 is clamped between a ridge 45 on the closing housing part 22 and an axial end surface of the spacer 25 in which the first spacer recess 43 is formed.

Thus, two diaphragms 23 are provided, one on either side of the spacer 25, with the movable valve element 24 transferring an axial force between the two. The diaphragms 23 serve to separate the actuating fluid from the liquid of which the flow is being regulated whilst still allowing the movable valve element 24 to move axially. It is observed that the same effect could be achieved by providing one or more sealing elements surrounding the movable valve element 24 between the movable valve element 24 and the spacer 25, e.g. in the spacer aperture 42. Then, the diaphragm 23 arranged between the closing housing part 22 and the spacer 25 could be omitted. These alternative sealing parts might, however, impede movement of the movable valve element 24 in a relatively unpredictable manner, causing it to stick, for example.

The closing housing part 22 has formed therein an actuating fluid port 46 (Figs. 4,5) for connection to the actuating fluid conduit 20. A relatively short passage 47 connects the actuating fluid port 46 to a recess 48 forming a chamber, in use. The diaphragm 23 at the axial end surface 49 of the movable valve element 24 at the end of the increased-diameter section 41 is subject to the pressure of the fluid in this chamber, in use. The force due to this pressure is transferred to the opposite axial end, which transfers it to the diaphragm 23 arranged at that end, which is movable into and out of engagement with the valve seat 33.

Because the valve seat aperture 32 has a smaller diameter than the channel 35, the pressure of the liquid at the inlet port 29 acts on a smaller area when the valve is closed than when the valve is open. Thus, the valve closes at a higher actuating fluid (filtrate) pressure than that at which it opens. This effect is enhanced by the magnetic force, that only acts to urge the movable valve element 24 towards the valve seat when the part arranged to engage the valve seat (in this case one of the diaphragms 23) is within a certain distance of the valve seat (in this case the annular body section 34).

The ratio of the surface areas defined by ridges holding the diaphragms 23, in the example the main housing part ridge 37 and the ridge 45 on the closing housing part 22, is such that the actuating fluid pressure sufficient to close the valve 5 is lower than the pressure of the liquid at the liquid inlet port 29. These ridges 37,45 define the effective surfaces of the diaphragms 23.

The movable valve element 24 is or comprises a permanent magnet, whereas at least the valve seat 33, in the illustrated embodiment the entire body 28 is made of a magnetisable material. As the movable valve element 24 moves closer to the valve seat 33 a larger magnetic force will attract it towards the valve seat 33. This ensures that the valve 5 cannot remain only slightly open. Furthermore, a relatively large pressure difference between the liquid at the inlet port 29 and the actuating fluid is required to open the valve 5, once it is closed. Because the valve 5 interrupts the flow of liquid from the apparatus inlet to the device inlet 7, rather than the flow of retentate from the retentate outlet 9 a situation in which filtrate leaving the apparatus at a low rate is replaced by liquid passing through the membrane at an equally low rate and relatively low trans-membrane pressure differential cannot occur. Filtrate production is reliably interrupted and recommenced.

As a result, the production of filtrate is regulated to ensure that a relatively large proportion of filtrate is produced at relatively large trans-membrane pressure differentials, even if the appliance 18 draws filtrate at a relatively low rate.

The invention is not limited to the embodiments described above, which may be varied within the scope of the accompanying claims. For example, the filtrate pump 10 may be omitted. The valve 5 may instead be used in a liquid treatment apparatus of the type disclosed in EP 2 992 945 A1, in which the accumulator includes a filtrate reservoir and a retentate reservoir separated by a movable barrier. Also, the membrane filtration device 6 may comprise a system including a head part and a replaceable membrane filtration cartridge, similar to the pre-treatment system 2.

In the illustrated embodiment, the permanent magnet might be comprised in only the increased-diameter section 41 of the movable valve element 24. That is to say, the permanent magnet may be comprised in only an axial section of the movable valve element 24 that does not pass through the part guiding movement of the movable valve element 24, in the example the spacer 25. Then, only the part guiding the movement of the movable valve element 24 forming the actuating part of the valve 5 would need to be made of magnetisable material. The surrounding housing could be made of non-ferromagnetic material, e.g. injection-moulded polymer material.

### List of reference numerals

- 1: - inlet fitting
- 2: - pre-treatment system
- 3: - head part
- 4: - liquid treatment cartridge
- 5: - valve
- 6: - membrane filtration device
- 7: - device inlet
- 8: - filtrate outlet
- 9: - retentate outlet
- 10: - filtrate pump
- 11: - drain
- 12: - variable throttle
- 13: - accumulator
- 14: - filtrate reservoir
- 15: - gas reservoir
- 16: - impermeable membrane
- 17: - outlet fitting
- 18: - appliance
- 19: - accumulator fitting
- 20: - actuating fluid conduit
- 21: - main housing part
- 22: - closing housing part
- 23: - diaphragm
- 24: - valve element
- 25: - spacer
- 26a-d: - main housing part bores
- 27a-d: - closing housing part bores
- 28: - body
- 29: - inlet port
- 30: - outlet port
- 31: - inlet passage
- 32: - valve seat aperture
- 33: - valve seat
- 34: - annular body section
- 35: - channel
- 36: - outlet passage
- 37: - main housing part ridge
- 38: - recess
- 39: - reference axis
- 40: - reduced-diameter section
- 41: - increased-diameter section
- 42: - spacer aperture
- 43: - first spacer recess
- 44: - second spacer recess
- 45: - ridge on closing housing part
- 46: - actuating fluid port
- 47: - passage in closing housing part
- 48: - recess in closing housing part
- 49: - movable valve element surface

## Claims

1. Valve for a liquid treatment apparatus, the valve including:
a valve housing (21,22),
wherein the valve housing (21,22) includes at least three ports,
wherein the ports include
a first port (46) for connection to a conduit (20) for an actuating fluid;
a liquid inlet port (29); and
a liquid outlet port (30),
wherein the liquid inlet port (29) and the liquid outlet port (30) are in liquid communication via a passage (31,35,36) through a valve seat (33), and
wherein the valve housing (21,22) includes a chamber (48) in fluid communication with the first port (46);
a movable valve part (23) movable into and out of engagement with the valve seat (33) to regulate a flow of liquid through the valve seat (33);
an actuating part (24), arranged to transfer a force due to the pressure of fluid in the chamber (48) to the movable valve part (23); and
at least one sealing part (23) for separating fluid in the chamber (22) from liquid in the passage (31,35,36), **characterised by**
at least one permanent magnet, arranged to exert a magnetic force acting to urge at least one of the actuating part (24) and the movable valve part (23) towards the valve seat (33) at least when the movable valve part (23) is within a certain distance of the valve seat (33).

2. Valve according to claim 1,
arranged to move from a closed configuration, in which a flow of liquid through the valve seat (33) is interrupted, to an open configuration at a lower actuating fluid pressure than an actuating fluid pressure at which it is arranged to move from the open to the closed configuration,
wherein the movable valve part (23) is arranged to have a larger effective surface area exposed to the liquid in the open configuration than in the closed configuration.

3. Valve according to claim 1 or 2,
wherein the at least one sealing part includes at least one liquid-impermeable diaphragm (23).

4. Valve according to claim 3,
wherein at least one of the at least one diaphragms (23) comprises the movable valve part.

5. Valve according to claim 3 or 4,
wherein the actuating part includes a movable valve element (24), guided for movement in an axial direction towards and away from the valve seat (33) and in contact with at least one of the at least one diaphragms (23) at a respective axial end.

6. Valve according to claim 5,
wherein a first axial end of the movable valve element (24) contacts a diaphragm (23) exposed to the chamber (48) over a first surface area or has an axial end surface exposed to the chamber (48) over the first surface area,
wherein a second axial end of the movable valve element (24) opposite the first axial end forms the movable valve part and has an axial end surface with a second surface area or contacts a diaphragm (23) forming the movable valve part and exposable to liquid over a second surface area on an opposite side to the movable valve element (24) when out of engagement with the valve seat (33), and
wherein the first surface area is larger than the second surface area.

7. Valve according to any one of the preceding claims,
wherein the movable valve part (23) is made of non-ferromagnetic material.

8. Valve according to any one of the preceding claims,
wherein the at least one magnet is comprised in at least one of the movable valve part (23) and the actuating part (24), and
wherein the valve housing (21,22) includes at least a part (28) made of magnetisable material.

9. Liquid treatment apparatus, including:
an inlet (1) for liquid to be treated;
a liquid treatment device (6) having at least an inlet (7) for liquid to be treated and an outlet (8) for treated liquid;
an accumulator (13) for storing the treated liquid;
a valve (5) according to any one of claims 1-8, arranged to regulate a flow of liquid through the liquid treatment device (6); and
a conduit (20) connected to the first port (46) and arranged to carry an actuating fluid at a pressure commensurate with an amount of liquid in the accumulator (13).

10. Liquid treatment apparatus according to claim 9,
wherein the actuating fluid is treated liquid.

11. Liquid treatment apparatus according to any one of claims 9-10,
wherein the accumulator (13) is a hydropneumatic accumulator.

12. Liquid treatment apparatus according to any one of claims 9-11,
wherein the liquid treatment device (6) is a membrane filtration device.

13. Liquid treatment apparatus according to claim 12,
wherein the membrane filtration device (6) is configured to operate in cross-flow filtration mode and includes an outlet (9) for retentate.

14. Liquid treatment apparatus according to claim 13,
wherein the valve (5) is arranged between the apparatus inlet (1) and the liquid treatment device inlet (7).

15. Use of a valve (5) according to any one of claims 1-8 to regulate a flow of liquid to be treated in a liquid treatment apparatus, e.g. a liquid treatment apparatus according to any one of claims 9-14, in dependence on an amount of liquid in an accumulator (13) arranged to store the treated liquid.
